# EUROPÄISCHE PATENTSCHRIFT

(11) **EP 3 879 244 B1**
(45) Veröffentlichungstag und Bekanntmachung des Hinweises auf die Patenterteilung: **26.06.2024**
(21) Anmeldenummer: 21160632.2
(22) Anmeldetag: 04.03.2021
(51) Int. Cl.: G01G 19/12, G01G 3/14, G01G 21/30, G01G 23/06, G01L 1/22

(54) **SENSORANORDNUNG UND VERFAHREN ZUR HERSTELLUNG EINER SENSORANORDNUNG**
SENSOR ASSEMBLY AND METHOD FOR PRODUCING A SENSOR ASSEMBLY
SYSTÈME DE CAPTEUR ET PROCÉDÉ DE FABRICATION D'UN SYSTÈME DE CAPTEUR

(30) Priorität: 09.03.2020 DE 102020106383
(43) Veröffentlichungstag der Anmeldung: 15.09.2021
(73) Patentinhaber: Voss Automotive GmbH, 51688 Wipperfürth (DE)
(72) Erfinder: ETSCHEID, Tobias, 51789 Lindlar (DE); ZWILLUS, Christian, 51702 Bergneustadt (DE); RÖHRIG, Lukas, 51709 Marienheide (DE); RUDEL, Stev, 51766 Engelskirchen (DE)
(74) Vertreter: Dr. Solf & Zapf Patent- und Rechtsanwalts PartG mbB

(56) Entgegenhaltungen:
- US-A- 3 621 437

## Beschreibung

Die Erfindung betrifft eine Sensoranordnung zur Lasterfassung an einem Fahrwerksteil eines Kraftfahrzeuges. Die Sensoranordnung weist mindestens einen Übertragungskörper auf. Der Übertragungskörper weist einen ersten Befestigungsabschnitt, einen zweiten Befestigungsabschnitt und einen Sensorabschnitt auf. Jeder Befestigungsabschnitt verfügt über mindestens eine Montageausnehmung, mindestens eine Spannfläche, die im Montagezustand von dem Fahrwerksteil weggewandt ist, und mindestens eine Anlagefläche, die im Montagezustand in Richtung des Fahrwerksteils orientiert ist. Der Sensorabschnitt ist zwischen dem ersten Befestigungsabschnitt und dem zweiten Befestigungsabschnitt angeordnet. Im Sensorabschnitt ist mindestens ein Sensor befestigt.

Sensoranordnungen zur Lasterfassung, insbesondere zur Achslast- und Gewichtsbestimmung von Fahrzeugen, sind im Stand der Technik in einer Vielzahl von Ausgestaltungen bekannt. Mit derartigen Sensoranordnungen ist eine Lasterfassung sowohl bei stehenden Fahrzeugen - statische Messung - als auch bei bewegten Fahrzeugen - dynamische Messung - möglich. Aus der Praxis ist beispielsweise bekannt, als Sensor einen Dehnmessstreifen direkt an einem Fahrwerksteil - an der Messstelle- zu befestigen. Der Dehnmesstreifen wird beispielsweise auf die Messstelle aufgeklebt. Die Materialspannung wird direkt von der Oberfläche des Fahrwerksteils auf den Sensor übertragen und die Verformung ausgewertet.

Ferner sind Sensoranordnungen mit Dehnungsübertragern bekannt. Als Dehnungsübertrager wird beispielsweise ein Blechstreifen verwendet, der an dem Fahrwerksteil befestigt wird, beispielsweise mit dem Fahrwerksteil verschweißt oder durch Schrauben oder Nieten verbunden wird. Auf dem Blechstreifen ist ein Sensor, beispielsweise ein Dehnmessstreifen, vormontiert, so dass dieser nicht am Montageort verklebt werden muss. Des Weiteren ist vorgesehen, dass derartige Dehnungsübertrager von einem Gehäuse umgeben sind. Gattungsgemäße Sensoranordnungen sind beispielsweise aus US 3,780,817 A1 und DE 10 2017 126 135 A1 bekannt.

US 3 621 437 A offenbart eine Vorrichtung zur Verformungsmessung mit einem Übertragungskörper, der an einer Messposition anschraubbar ist. Der Übertragungskörper weist in seinem Mittenbereich eine Ausnehmung auf, in der eine erste und eine zweite Kapselmasse angeordnet sind. In einem verjüngten Mittenbereich des Übertragungskörpers sind Dehnmessstreifen angeordnet, die mit auf der Außenseite des Gehäuses angeordneten Platinen verbunden sind.

Die aus dem Stand der Technik bekannten Sensoranordnungen sowie Verfahren zu deren Herstellung weisen den Nachteil auf, dass äußere Einflüsse auf den Übertragungskörper einwirken, beispielsweise Schwingungen und Impulse auf den Übertragungskörper eingekoppelt werden. Ferner können die Messergebnisse dadurch verfälscht werden, dass sich der den Sensor tragende Übertragungskörper relativ zum Fahrwerksteil verschiebt.

Der vorliegenden Erfindung liegt daher die Aufgabe zugrunde, eine Sensoranordnung sowie ein Verfahren zur Herstellung einer Sensoranordnung anzugeben, bei denen die aus dem Stand der Technik bekannten Nachteile reduziert werden.

Die vorgenannte Aufgabe ist bei einer gattungsgemäßen Sensoranordnung mit dem Merkmalsinhalt des Kennzeichnungsteils des Anspruchs 1 gelöst. Die Sensoranordnung ist zur Lasterfassung, also beispielsweise der Achslast- und Gewichtsbestimmung, an einem Fahrwerksteil eines Nutzfahrzeuges, beispielsweise eines Lastkraftwagens, vorgesehen. Unter "Fahrwerksteil" werden im Sinne der Erfindung alle strukturellen Bauteile eines Fahrzeuges verstanden, insbesondere Achsen, Streben, Fahrzeugrahmen und Fahrzeugrahmenteile, aber auch Kippmulden oder sonstige Auf- oder Anbauteile, an denen eine Verformung gemessen werden soll.

Die Sensoranordnung weist mindestens einen Übertragungskörper auf. Der Übertragungskörper ist am Fahrwerksteil befestigbar und dient der Übertragung von Verformungen des Fahrwerksteils, insbesondere Biegung und Torsion, zur Erfassung durch einen Sensor. Der Übertragungskörper ist vorzugsweise einstückig ausgebildet. Der Übertragungskörper weist zur Befestigung am Fahrwerksteil mindestens einen ersten Befestigungsabschnitt und mindestens einen zweiten Befestigungsabschnitt auf. Zwischen dem ersten Befestigungsabschnitt und dem zweiten Befestigungsabschnitt ist ein Sensorabschnitt angeordnet, in dem mindestens ein Sensor angeordnet ist.

Jeder der beiden Befestigungsabschnitte verfügt über mindestens eine Montageausnehmung, die zur Befestigung des Übertragungskörpers am Fahrwerksteil verwendbar ist. Beispielsweise wird der Übertragungskörper mit den Montageausnehmungen auf zwei am Fahrwerksteil befestigte Stehbolzen aufgeschoben und der Übertragungskörper mit den Stehbolzen verschraubt oder es werden Schrauben durch die Montageausnehmung hindurchgeführt, die mit Gewindeausnehmungen im Fahrwerksteil zusammenwirken.

Jeder der beiden Befestigungsabschnitte weist mindestens eine Spannfläche und mindestens eine Anlagefläche auf. Die Montageausnehmung ist so angeordnet, dass sie die Spannfläche und die Anlagefläche durchtritt. Die Spannfläche ist im Montagezustand von dem Fahrwerksteil weggewandt und dient der Anlage beispielsweise eines Schraubenkopfes oder einer Schraubenmutter zur Befestigung. Die Anlagefläche ist im Montagezustand in Richtung des Fahrwerksteils gerichtet und liegt beispielsweise unmittelbar an dem Fahrwerksteil an.

Am Sensorabschnitt zwischen dem ersten Befestigungsabschnitt und dem zweiten Befestigungsabschnitt ist mindestens ein Sensor angeordnet. Der Sensor weist beispielsweise mindestens einen Dehnmessstreifen oder eine Dehnmessstreifenanordnung mit einer Mehrzahl von Messgittern auf. Ferner ist vorgesehen, dass der Sensor zur Erfassung von Messdaten auf Basis eines piezoelektrischen und/oder kapazitiven Messverfahrens ausgebildet ist.

Vorzugsweise weist die Sensoranordnung ferner mindestens eine Messverstärker- und Auswerteelektronik auf, mit der die vom Sensor erfassten Messdaten verarbeitet werden. Insbesondere ist der Sensor mit einem Klebstoff, insbesondere einem hitzeaktivierten Klebstoff, an dem Sensorabschnitt befestigt. Es ist auch vorgesehen, dass ein oder mehrere Messgitter direkt auf den Sensorabschnitt aufgebracht werden, beispielsweise durch Aufdampfen, z.B. Dünnschicht- oder Dickschichtechnologie, oder durch ein additives Fertigungsverfahren, z.B. Laser-Direktstrukturieren (LDS)

Es sind Ausführungen der Sensoranordnung vorgesehen, bei der der Übertragungskörper mindestens zwei Sensorabschnitte und mindestens drei Befestigungsabschnitte aufweist. Vorzugsweise verbindet jeder Sensorabschnitt jeweils zwei Befestigungsabschnitte. Jeder Sensorabschnitt weist mindestens einen Sensor auf. Es ist vorgesehen, dass die Sensorabschnitte auf einer gedachten Linie angeordnet sind oder dass die Sensorabschnitte in einem Winkel zueinander - mit dazwischen angeordnetem Befestigungsabschnitt - angeordnet sind. Ferner sind auch Ausführungen mit vier Sensorabschnitten - mit jeweils mindestens einem Sensor -und vier Befestigungsabschnitten - vorgesehen. Beispielsweise sind die Sensorabschnitte und Befestigungsabschnitte in einem Quadrat angeordnet, wobei die Befestigungsabschnitte in den Ecken angeordnet sind.

Umgebungseinflüsse auf die Messergebnisse werden erfindungsgemäß dadurch minimiert, dass der Übertragungskörper zumindest teilweise in eine erste elastische Kapselmasse eingebettet ist und dass die erste elastische Kapselmasse zumindest teilweise von einem Entkopplungsteil umgeben ist. Vorzugsweise ist der Übertragungskörper mit Ausnahme der Anlageflächen der Befestigungsabschnitte vollständig in die erste elastische Kapselmasse eingebettet. Die erste elastische Kapselmasse verhindert das Eindringen von Feuchtigkeit und damit eine Beschädigung der Sensoranordnung. Die erste Kapselmasse ist beispielsweise als Verguss, insbesondere mediendichter Verguss, oder Umspritzung mit einer Formmasse ausgebildet. Ferner ist vorgesehen, dass die erste Kapselmasse mittels eines additiven Fertigungsverfahrens hergestellt ist. Die erste Kapselmasse ist jedenfalls so elastisch, dass keine Beeinflussung der Verformungseigenschaften des in der Kapselmasse eingebetteten Übertragungskörpers erfolgt. Als vorteilhafte Materialen für die erste Kapselmasse haben sich Polyurethane (PUR) herausgestellt.

Die erste Kapselmasse ist zumindest teilweise von einem Entkopplungsteil umgeben, das an der ersten Kapselmasse angeordnet ist. Vorteilhaft ist das Entkopplungsteil an der ersten Kapselmasse befestigt, bevorzugt stoff- und/oder formschlüssig befestigt, beispielsweise mit dieser verklebt. Das Entkopplungsteil ist beispielsweise als eine die erste Kapselmasse umgebende Stützstruktur, vorzugsweise mit oder ohne Hohlräume, ausgebildet. Das Entkopplungsteil ist beispielsweise mittels Spritzgießen, Pressen oder einem additiven Fertigungsverfahren hergestellt.

Bei der der Sensoranordnung ist vorgesehen, dass die erste Kapselmasse und das Entkopplungsteil, insbesondere die zweite Kapselmasse, zu den Montageausnehmungen korrespondierende, insbesondere koaxial angeordnete, Ausnehmungen aufweisen, so dass ein in die Ausnehmungen einbringbares Befestigungsmittel unmittelbar mit der Spannfläche des jeweiligen Befestigungsabschnittes des Übertragungskörpers zusammenwirken kann. Die Befestigungsabschnitte des Übertragungskörpers sind folglich trotz der Einbettung von Befestigungsmitteln unmittelbar kontaktierbar, wodurch die Kraftübertragung von dem Befestigungsmittel auf den Übertragungskörper und damit auch auf das Fahrwerksteil verbessert wird.

Die Ausnehmungen in der ersten Kapselmasse und der zweiten Kapselmasse bzw. dem Entkopplungsteil weisen einen Durchmesser auf, der größer als der Durchmesser der zugehörigen Montageausnehmung ist.

Das Entkopplungsteil reduziert das Einkoppeln von Schwingungen und Impulsen auf den Übertragungskörper, so dass Störeinflüsse auf die Messergebnisse minimiert werden. Insbesondere werden Stöße und Vibrationen durch das Entkopplungsteil gedämpft.

Gemäß einer ersten Ausgestaltung ist vorgesehen, dass die Sensoranordnung mindestens eine Gehäusehülle aufweist. Die Gehäusehülle ist auf dem Entkopplungsteil gelagert, insbesondere ausschließlich auf dem Entkopplungsteil gelagert. Insbesondere steht die Gehäusehülle in direktem Kontakt mit dem Entkopplungsteil. Die Gehäusehülle ist mit dem Entkopplungsteil vorzugsweise stoff- und/oder formschlüssig verbunden. Die Gehäusehülle ist vorzugsweise starr ausgebildet, beispielsweise aus einem Metall oder Kunststoff.

Das Entkopplungsteil reduziert die Übertragung von Schwingungen und Impulsen zwischen Gehäuseteil und Übertragungskörper, so dass keine oder nur eine sehr geringfügige Übertragung von äußeren Einflüssen, z.B. Stößen oder Vibrationen, auf den Übertragungskörper erfolgt.

Gemäß einer bevorzugten Ausgestaltung der Sensoranordnung ist vorgesehen, dass das Entkopplungsteil als zweite Kapselmasse ausgebildet ist, dass die erste Kapselmasse zumindest teilweise in die zweite Kapselmasse eingebettet ist, und dass die erste Kapselmasse und die zweite Kapselmasse unterschiedliche Materialeigenschaften aufweisen. Die zweite Kapselmasse ist beispielsweise als Vergussmasse, insbesondere mediendichter Verguss, als Umspritzung mit einer Formmasse oder mittels eines additiven Fertigungsverfahrens ausgebildet. Die erste Kapselmasse ist zusammen mit dem Übertragungskörper zumindest teilweise, insbesondere vollständig, in die zweite Kapselmasse eingebettet. Die erste Kapselmasse und die zweite Kapselmasse weisen unterschiedliche Materialeigenschaften auf, so dass eine vorteilhafte Entkopplung von äußeren Einflüssen zum Übertragungskörper erfolgt. Beispielsweise sind die erste Kapselmasse und die zweite Kapselmasse aus unterschiedlichen Materialien hergestellt.

Als besonders vorteilhaft hat sich gemäß einer weiteren Ausgestaltung der Sensoranordnung herausgestellt, wenn vorgesehen ist, dass zweite Kapselmasse einen geringeren Elastizitätsmodul als die erste Kapselmasse aufweist, oder dass die erste Kapselmasse einen geringeren Elastizitätsmodul als die zweite Kapselmasse aufweist. Die zweite Kapselmasse ist folglich elastischer als die erste Kapselmasse ausgebildet. Auf diese Weise lässt sich eine vorteilhafte Entkopplung zur Gehäusehülle realisieren.

Alternativ dazu ist vorgesehen, dass die erste Kapselmasse elastischer als die zweite Kapselmasse ausgebildet ist. Insbesondere sind die erste Kapselmasse und die zweite Kapselmasse aus einem Elastomer, einem Thermoplast oder einem thermoplastischen Elastomer gebildet. Als vorteilhaftes Material für die zweite Kapselmasse hat sich beispielsweise Gummi herausgestellt.

Eine weitere Ausgestaltung der Sensoranordnung sieht vor, dass mindestens ein Befestigungsmittel vorhanden ist, insbesondere mindestens zwei Befestigungsmittel vorhanden sind. Mit den Befestigungsmitteln ist der Übertragungskörper der Sensoranordnung an dem Fahrwerksteil befestigbar. Vorzugsweise ist vorgesehen, dass das Befestigungsmittel als Schraube ausgebildet ist. Eine Schraube kann die Montageausnehmungen des Übertragungskörpers durchtreten und mit einem in dem Fahrwerksteil angeordneten Innengewinde zusammenwirken. Der Schraubenkopf liegt dann an der Spannfläche des Übertragungskörpers an und bewirkt eine Normalkraft in Richtung des Fahrwerksteils.

Alternativ dazu ist vorgesehen, dass das Befestigungsmittel als Schraubenmutter ausgebildet ist. Bei einer derartigen Ausgestaltung sind am Fahrwerksteil beispielsweise mindestens zwei Stehbolzen angeordnet, auf die die Sensoranordnung, insbesondere der Übertragungskörper mit seinen beiden Montageöffnungen, aufsetzbar ist. Die Stehbolzen weisen ein Außengewinde auf, so dass zur Befestigung der Sensoranordnung, insbesondere des Übertragungskörpers, die Schraubenmuttern auf die Stehbolzen aufgeschraubt werden. Die Schraubenmuttern liegen dann an der jeweiligen Spannfläche des Übertragungskörpers an. Vorzugsweise weisen die Schraubenmuttern einen Betätigungsinnensechskant zur Betätigung auf. Die Schraubenmuttern weisen dazu ein Sackloch mit Innengewinde auf, das auf den jeweiligen Stehbolzen aufschraubbar ist. Der Betätigungsinnensechskant ist an dem stirnseitigen Endbereich, insbesondere gegenüberliegend zum jeweiligen Stehbolzen, angeordnet ist.

Ferner ist vorgesehen, dass die Sensoranordnung, insbesondere der Übertragungskörper, mit als Schrauben ausgebildeten Befestigungsmitteln in, insbesondere an dem Fahrwerksteil befestigten, Innengewinde-Schweißhülsen befestigt wird. Vorzugsweise sind die Innengewinde-Schweißhülsen mittels Kondensator-Entladungsschweißen am Fahrwerksteil befestigt.

Es ist vorgesehen, dass die Befestigungselemente zum Schutz vor einem Lösen mit dem Übertragungskörper stoffschlüssig verbunden werden, vorzugweise mittels Schweißen, insbesondere durch Punktschweißen.

Um vorteilhaft eine Übertragung von Schwingungen und Impulsen weiter zu reduzieren, ist vorgesehen, dass die Befestigungsmittel so angeordnet sind bzw. die erste Kapselmasse und/oder das Entkopplungsteil bzw. die zweite Kapselmasse so ausgebildet sind, dass jedes Befestigungsmittel im Montagezustand nur an der ersten Kapselmasse oder nur am Entkopplungsteil bzw. der zweiten Kapselmasse anliegt.

Insbesondere um ein Eindringen von Feuchtigkeit zur Anlagefläche zu verhindern, ist gemäß einer weiteren Ausgestaltung der Sensoranordnung vorgesehen, dass mindestens ein Ausnehmungsdichtmittel vorhanden ist, insbesondere mindestens zwei Ausnehmungsdichtmittel vorhanden sind. Das Ausnehmungsdichtmittel ist zwischen einem Befestigungsmittel und einer Ausnehmung in der ersten Kapselmasse bzw. der zweiten Kapselmasse dichtend anordenbar. Das Ausnehmungsdichtmittel ist beispielsweise einen Schraubenkopf umgebend oder eine Schraubenmutter umgebend angeordnet und liegt nach Einbringen in eine Ausnehmung dichtend an der Innenwand der Ausnehmung, insbesondere an der ersten Kapselmasse oder der zweiten Kapselmasse, an. Das Ausnehmungsdichtmittel ist insbesondere als O-Ring-Dichtung ausgebildet.

Alternativ dazu ist vorgesehen, dass das Ausnehmungsdichtmittel in der Ausnehmung, beispielsweise in einer Nut in der Ausnehmung, angeordnet ist. Nach Einbringen eines Befestigungsmittels liegt das Ausnehmungsdichtmittel dann dichtend an dem Befestigungsmittel an. Dazu weist ein Schraubenkopf oder eine Schraubenmutter eine runde Außenkontur auf.

Um ferner ein Eindringen von Feuchtigkeit an die Anlageflächen zu verhindern, ist gemäß einer weiteren Ausgestaltung vorgesehen, dass ein Übertragerdichtmittel vorhanden ist, und dass das Übertragerdichtmittel zwischen erster Kapselmasse und Fahrwerksteil und/oder zwischen zweiter Kapselmasse und Fahrwerksteil anordenbar ist. Das Übertragerdichtmittel ist beispielsweise als O-Ring-Dichtung oder Dichtmasse ausgebildet. Ferner haben sich Formdichtungen als vorteilhaft herausgestellt.

Das Übertragerdichtmittel ist vorzugsweise so angeordnet, dass zwischen Sensoranordnung und Fahrwerksteil keine Feuchtigkeit zu den Anlageflächen gelangen kann. Insbesondere ist das Übertragerdichtmittel so angeordnet, dass es beide Montageöffnungen, insbesondere beide Anlageflächen, umschließt, also beide Montageöffnungen, insbesondere auch die Anlageflächen, mit in den gedichteten Bereich einschließt.

Die Anfälligkeit gegen äußere Störeinflüsse lässt sich vorteilhaft gemäß einer weiteren Ausgestaltung dadurch reduzieren, dass mindestens eine mit dem Sensor elektrisch verbundene Platinenanordnung in der ersten Kapselmasse angeordnet ist. Vorzugsweise beinhaltet die Platinenanordnung mindestens eine Messverstärker- und/oder Auswerteelektronik. Durch die Anordnung der Platinenanordnung in der ersten Kapselmasse ist diese zuverlässig vor Störeinflüssen, insbesondere vor Feuchtigkeit, geschützt. Die Platinenanordnung ist beispielsweise mit einer nach außen ragenden Verbindungsleitung für die Sensoranordnung kontaktierbar, insbesondere in ein Messsystem einbindbar.

Um beispielsweise einen Volumenausgleich beim Abdämpfen von äußeren Lasten zu gewährleisten, ist gemäß einer weiteren Ausgestaltung der Sensoranordnung vorgesehen, dass das Entkopplungsteil, insbesondere die zweite Kapselmasse, eine Mehrzahl von Rücksprüngen in der Oberfläche aufweist, insbesondere so, dass zwischen Entkopplungsteil, insbesondere zweiter Kapselmasse, und Gehäusehülle eine Mehrzahl von Hohlräumen ausgebildet ist. Insbesondere bei inkompressiblen zweiten Kapselmassen, beispielsweise Gummi, dienen diese Hohlräume als Volumenausgleich bei äußeren Lasten.

Eine zuverlässige Übertragung der Fahrwerksteilverformung auf den Übertragungskörper wird ferner vorzugsweise gemäß einer weiteren Ausgestaltung dadurch gewährleistet, dass die Anlageflächen und/oder die Spannflächen der Befestigungsabschnitte ein Profil aufweisen, insbesondere ein Pyramiden-, Zahn- oder Rautenprofil, mit einer Mehrzahl von pyramiden-, zahn- oder rautenförmiger Vorsprünge.

Besonders vorteilhaft ist vorgesehen, dass die Spannflächen ein Zahnprofil aufweisen, um ein Lösen einer Schraubverbindung zu verhindern. Die zahnförmigen Vorsprünge sind beispielsweise entgegen der Löserichtung einer Schraubverbindung orientiert, so dass sie einem Lösen der Schraubverbindung nach der Montage entgegenwirken. Ferner ist vorgesehen, dass der Reibwert des Profils größer als der Reibwert der Schraube bzw. des Schraubenkopfes ist. Dadurch erfolgt keine Sensorverstimmung durch das Anschraubdrehmoment und die Schraubenkopfreibung.

Das Profil in der Anlagefläche ist vorzugsweise so ausgestaltet und eingerichtet, dass es in die Oberfläche des Fahrwerksteils zumindest teilweise eindringen kann. Als besonders vorteilhaft für die Anlageflächen hat sich ein Pyramiden- oder Rautenprofil herausgestellt. Vorzugsweise ist vorgesehen, dass die Montageflächen jeweils ein Pyramidenprofil aufweisen. Das Pyramidenprofil ist durch eine Mehrzahl an pyramidenförmigen Vorsprüngen gebildet. Die pyramidenartigen Vorsprünge sind dazu vorgesehen, unter Wirkung einer Kraft des Befestigungsmittels in die Oberfläche des Fahrwerksteils einzudringen. Auf diese Weise wird vorteilhaft eine kraft- und formschlüssige Verbindung zwischen dem Übertragungskörper und dem Fahrwerksteil geschaffen und messwertbeeinflussende Verschiebungen werden verhindert. Ferner kann das Profil Oberflächenbeschichtungen des Fahrwerksteils durchdringen, wodurch Setz- und Kriechvorgänge in der Schraubenverbindung, die zur Reduzierung einer Vorspannkraft führen, minimiert werden.

Beispielsweise bei pyramidenförmigen Vorsprüngen mit quadratischer Grundfläche können etwa zwei Drittel der Höhe der Pyramide in das Fahrwerksteil eindringen. Ab dieser Eindringtiefe ist das Volumen zwischen den Vorsprüngen ausgefüllt, so dass keine Setzprozesse mehr erfolgen. Vorzugsweise ist vorgesehen, dass die Höhe der pyramidenförmigen Vorsprünge an die Oberflächenbeschichtung des Fahrwerksteils angepasst ist. Eine vorteilhafte Höhe eines pyramidenförmigen Vorsprungs entspricht etwa der Länge einer Seitenkante der Grundfläche. Eine vorteilhafte Höhe eines pyramidenförmigen Vorsprungs liegt im Bereich zwischen 0,6 mm bis 1,2 mm.

Ferner ist vorgesehen, dass zumindest die Profile an den Spannflächen und/oder an den Anlageflächen eine größere Härte als die zum Zusammenwirken vorgesehene Fläche haben, um ein Eindringen zu gewährleisten. Beispielsweise haben die pyramiden- oder rautenförmigen Vorsprünge eine größere Oberflächenhärte als das Fahrwerksteil am Montageort. Die Oberflächenhärte des Profils kann beispielsweise durch Werkstoffauswahl oder einen Härteprozess, z. B. Nitrierhärten, eingestellt werden.

Das Profil wird beispielsweise durch Umformen, z. B. Stanzen, Prägen, oder durch abtragende Verfahren, z. B. Fräsen, Stoßen, Strahlen, Ätzen, oder durch auftragende Verfahren, wie Lasersintern oder Flammspritzen, ausgebildet. Ferner ist vorgesehen, dass das Profil durch eingebettete Kugeln oder Halbkugeln oder durch angebrachte Vorsprünge, insbesondere Spitzen, gebildet wird.

Das Profil eliminiert den Toleranzausgleich am Montageort und kann beispielsweise eine Beschichtung des Fahrwerksteils an der Anlagefläche durchdringen, so dass kein Freilegen oder Entlacken der Fläche erforderlich ist.

Gemäß einer alternativen Ausgestaltung ist vorgesehen, dass mindestens zwei Unterlegscheiben vorhanden sind, dass die Unterlegscheiben im Montagezustand zwischen Montagefläche und Fahrwerksteil anordenbar sind, und dass mindestens eine Oberfläche jeder Unterlegscheibe, vorzugsweise mindestens zwei Oberflächen jeder Unterlegscheibe, ein Profil aufweist, insbesondere ein Pyramiden-, Zahn- oder Rautenprofil mit einer Mehrzahl von pyramiden-, zahn- oder rautenförmigen Vorsprüngen. Wie bereits vorstehend für das Profil der Anlageflächen beschrieben, haben die pyramiden-, zahn- oder rautenförmigen Vorsprünge den Vorteil, dass diese in die jeweils gegenüberliegende Fläche eindringen und dadurch den Übertragungskörper in einer bestimmten Position fixieren. Die Vorteile der Profile sind vorstehend für die Anlagefläche beschrieben worden und gelten gleichermaßen für die Profile an den Unterlegscheiben. Vorzugsweise ist vorgesehen, dass die Unterlegscheiben nicht stoffschlüssig am Fahrwerksteil befestigt werden, insbesondere nicht mit dem Fahrwerksteil verschweißt werden.

Es ist vorgesehen, dass das Profil, insbesondere das Pyramidenprofil, nur auf einer Seite der Unterlegscheibe ausgebildet ist. Vorzugsweise ist vorgesehen, dass jede Unterlegscheibe auf beiden Seiten ein Profil, insbesondere ein Pyramidenprofil, aufweist, so dass die zwischen Fahrwerksteil und Übertragungskörper angeordnete Unterlegscheibe sowohl in die Montagefläche des Übertragungskörpers als auch in die Oberfläche des Fahrwerksteils eindringt und so den Übertragungskörper vorteilhaft relativ zum Fahrwerksteil festlegt.

Die Empfindlichkeit der Sensoranordnung lässt sich vorteilhaft gemäß einer weiteren Ausgestaltung dadurch beeinflussen, dass vorgesehen ist, dass eine Dicke des Übertragungskörpers im Sensorabschnitt zumindest abschnittsweise geringer als in den Befestigungsabschnitten ausgebildet ist, so dass der Sensorabschnitt bei Montage auf einer Montagefläche einen Abstand zur Montagefläche aufweist und/oder dass eine Breite des Übertragungskörpers im Sensorabschnitt geringer als eine Breite in den Befestigungsabschnitten ausgebildet ist. Der Sensorabschnitt ist gegenüber den Befestigungsabschnitten verjüngt ausgebildet. Vorzugsweise ist sowohl die Dicke als auch die Breite, insbesondere im gesamten Sensorabschnitt, geringer als die Dicke und Breite in den Befestigungsbereichen. Die Dicke im Sensorabschnitt entspricht etwa 50% der Dicke in den Befestigungsabschnitten und/oder die Breite im Sensorabschnitt beträgt etwa 2/3 der Breite in den Befestigungsabschnitten. Eine Länge des Sensorabschnitts entspricht etwa der Länge eines Befestigungsabschnitts. Die Steifigkeit der Befestigungsbereiche ist größer als die Steifigkeit im Sensorabschnitt, um ein möglichst großes Signal für den Sensor zu gewährleisten.

Um insbesondere eine Feuchtediffusion zu verhindern, ist gemäß einer weiteren Ausgestaltung der Sensoranordnung vorgesehen, dass die Gehäusehülle aus Metall, insbesondere einem tiefgezogenen Metall, oder einem Kunststoff, insbesondere einem Kunststoff mit mindestens einer Metallbeschichtung, hergestellt ist. Als vorteilhaft hat sich ein Kunststoff mit mindestens einer Schicht aus einem Metall herausgestellt, beispielsweise Alufolie oder Aluverbundfolie, z. B. Polypropylen (PP)- Aluminium (AI) - (Polypropylen) PP. Ferner hat sich auch die Verwendung eines Kunststoffes mit Barriereeigenschaften als vorteilhaft erwiesen. Ein Kunststoff weist beispielsweise ausreichende Barriereeigenschaften auf, wenn die Wasser-Diffusionsmenge gleich oder kleiner als 1g/m²d (Gramm pro Quadratmeter und Tag) ist. Geeignete Kunststoffe sind Polypropylen (PP), PE-HD (HDPE), Ethylen-Vinylalkohol-Copolymer (EVOH), Polyethylennaphthalat (PEN), Polyvinylidenfluorid (PVDF) oder bestimmte gefüllte Typen. Die Bremswirkung beeinflusst jedoch nicht direkt die Sättigung, sondern die Zeit bis diese eintritt. Mit den vorgenannten Gehäusehüllen wird vorteilhaft die Diffusion von Feuchtigkeit durch die Gehäusehülle verhindert.

Es ist vorgesehen, dass ein Übertragungskörper in einer Sensoranordnung gemäß einem der vorstehend beschriebenen Ausführungsbeispiele angeordnet ist.

Die eingangs genannte Aufgabe ist ferner gelöst durch ein Verfahren nach Anspruch 12 zur Herstellung einer Sensoranordnung zur Lasterfassung an einem Fahrwerksteil eines Nutzfahrzeugs, insbesondere nach einem der vorstehend beschriebenen Ausführungsbeispiele.

Durch die mehrfache Einbettung des Übertragungskörpers wird dieser vorteilhaft - wie für die vorstehenden Ausführungsbeispiele beschrieben - vor äußeren Störeinflüssen geschützt.

Gemäß einer Ausgestaltung des Verfahrens ist vorgesehen, dass ferner ein Befestigen einer Gehäusehülle an bzw. auf der zweiten Kapselmasse erfolgt. Das Befestigen erfolgt stoff- und/oder formschlüssig. Beispielsweise dadurch, dass die zweite Kapselmasse zumindest temporär elastisch verformt wird und dann durch die elastische Ausdehnung mit einer Vorspannung von der Innenseite an der Gehäusehülle anliegt.

Weitere vorteilhafte Ausgestaltungen der Erfindung ergeben sich aus der folgenden Figurenbeschreibung und den abhängigen Unteransprüchen.

### Es zeigen:

- Fig. 1: ein Ausführungsbeispiel einer Sensoranordnung in geschnittener Seitenansicht,
- Fig. 2: ein Ausführungsbeispiel einer Sensoranordnung in geschnittener Seitenansicht,
- Fig. 3: ein Ausführungsbeispiel einer Sensoranordnung in perspektivischer Ansicht von unten,
- Fig. 4a - 4c: ein Ausführungsbeispiel eines Übertragungskörpers, und
- Fig. 5: ein schematischer Ablauf eines Ausführungsbeispiels eines Verfahrens zum Herstellen einer Sensoranordnung.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

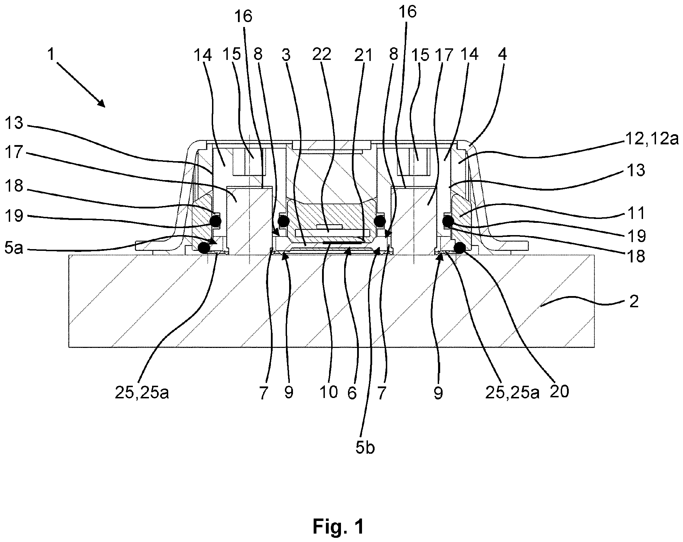

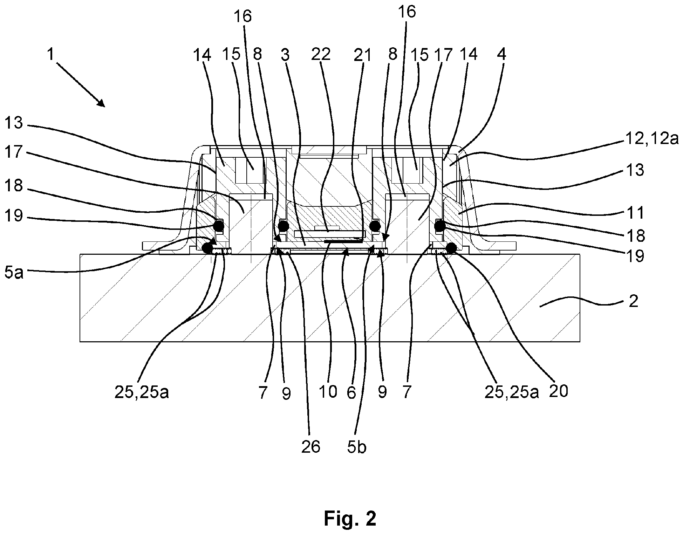

Fig. 1 und Fig. 2 zeigen verschiedene Ausführungsbeispiele einer Sensoranordnung 1 zur Lasterfassung, insbesondere zur Achslast- und Gewichtsbestimmung, an einem Fahrwerksteil 2, beispielsweise einem Achsträger, eines - nicht dargestellten - Nutzfahrzeugs. Die Sensoranordnung 1 weist mindestens einen Übertragungskörper 3 und mindestens eine Gehäusehülle 4 auf. Der Übertragungskörper 3 weist mindestens einen ersten Befestigungsabschnitt 5a und einen zweiten Befestigungsabschnitt 5b auf. Der erste Befestigungsabschnitt 5a und der zweite Befestigungsabschnitt 5b sind durch einen Sensorabschnitt 6 miteinander verbunden.

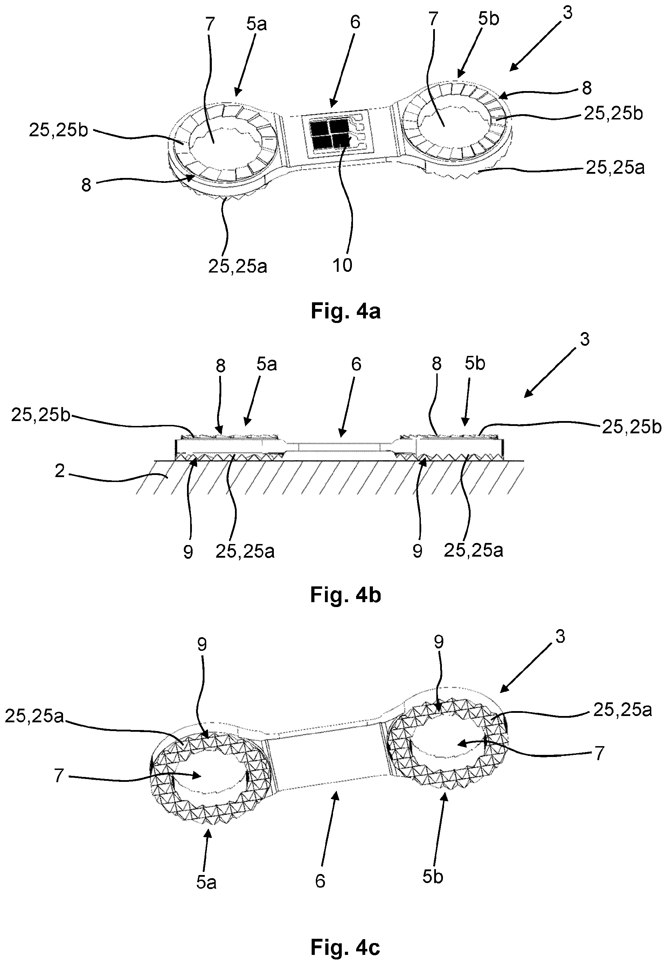

Fig. 4a bis Fig. 4c zeigen ein Ausführungsbeispiel eines Übertragungskörpers 3, beispielsweise für eine Sensoranordnung gemäß Fig. 1. Gemäß Fig. 1, 2 und 4a bis 4c weist jeder der Befestigungsabschnitte 5a, 5b mindestens eine Montageausnehmung 7, mindestens eine Spannfläche 8 und mindestens eine Anlagefläche 9 auf. Die Anlagefläche 9 ist im in Fig. 1 dargestellten Montagezustand in Richtung des Fahrwerksteils 2 gerichtet. Im Sensorabschnitt 6 ist ein Sensor 10 angeordnet, der bei diesen Ausführungsbeispielen eine Dehnmessstreifenanordnung mit einer Mehrzahl von Messgittern aufweist.

Gemäß Fig. 1 und Fig. 2 ist der Übertragungskörper 3 in eine elastische erste Kapselmasse 11 so eingebettet, dass lediglich die Anlageflächen 9 nicht von der ersten Kapselmasse 11 bedeckt sind. Die elastische Kapselmasse 11 ist ferner von einem Entkopplungsteil 12 umgeben, das bei dem in Fig. 1 dargestellten Ausführungsbeispiel als elastische zweite Kapselmasse 12a ausgebildet ist. Die erste Kapselmasse 11 und die zweite Kapselmasse 12a weisen unterschiedliche Materialeigenschaften auf, insbesondere ist die zweite Kapselmasse 12a elastischer als die erste Kapselmasse 11. Alternativ dazu ist auch vorgesehen, dass die erste Kapselmasse 11 elastischer als die zweite Kapselmasse 12a ist.

Gemäß Fig. 1 und Fig. 2 ist die Gehäusehülle 4 ausschließlich auf der zweiten Kapselmasse 12a gelagert. Die zweite Kapselmasse 12a erstreckt sich umlaufend auch an einem unteren Kragen der Gehäusehülle 4 zwischen Gehäusehülle 4 und Fahrwerksteil 2. Die erste Kapselmasse 11 und die zweite Kapselmasse 12a weisen zu den Montageausnehmungen 7 koaxial angeordnete Ausnehmungen 13 auf, in die bei den Ausführungsbeispielen der Fig. 1 und 2 jeweils ein Befestigungsmittel 14 eingebracht ist.

Die Befestigungsmittel 14 sind derart in den Ausnehmungen 13 angeordnet, dass sie unmittelbar mit der Spannfläche 8 der Befestigungsabschnitte 5a, 5b des Übertragungskörpers 3 zusammenwirken. Die Befestigungsmittel 14 sind so dimensioniert, dass sie nicht über die Gehäusehülle 4 hinausragen. Die Befestigungsmittel 14 sind hier als Schraubenmutter ausgebildet. Die als Schraubenmuttern ausgebildeten Befestigungsmittel 14 weisen jeweils einen Betätigungsinnensechskant 15 auf. Die Befestigungsmittel 14 weisen in einem Sackloch 16 ein Innengewinde auf, das mit einem Außengewinde von mit dem Fahrwerksteil 2 verbundenen Stehbolzen 17 zur Befestigung zusammenwirkt.

Der kreisförmig ausgebildete Außenumfang der Befestigungsmittel 14 weist jeweils eine Nut 18 auf, in der ein Ausnehmungsdichtmittel 19 in Form eines O-Rings angeordnet ist. Das Ausnehmungsdichtmittel 19 verhindert das Eindringen von Feuchtigkeit durch die Ausnehmungen 13.

Um ein Eindringen von Feuchtigkeit zu den Anlageflächen 9 zu verhindern, ist ferner ein Übertragerdichtmittel 20 vorgesehen, das bei diesen Ausführungsbeispielen ebenfalls als geschlossene Ringdichtung ausgebildet ist und zwischen erster Kapselmasse 11 und dem Fahrwerksteil 2 angeordnet ist. Das Übertragerdichtmittel 20 ist so ausgebildet, dass es die Anlageflächen 9 in den gedichteten Bereich einschließt. Das Übertragerdichtmittel 20 wird durch die Vorspannung der Befestigungsmittel 14 belastet, so dass es beidseitig dichtend anliegt.

Bei den Ausführungsbeispielen der Fig. 1 und 2 ist der Sensor 10 über eine Zuleitung 21 mit einer Platinenanordnung 22 verbunden, die eine Messverstärker- und Auswerteelektronik beinhaltet.

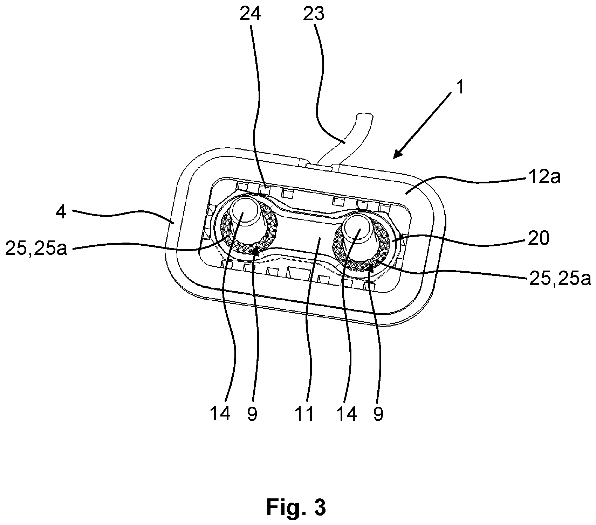

Das Ausführungsbeispiel der Fig. 3 zeigt ein Ausführungsbeispiel einer Sensoranordnung 1 in perspektivischer Ansicht von unten. Das Übertragerdichtmittel 20 ist so angeordnet, dass es beide Montageöffnungen 7, insbesondere beide Anlageflächen 9, umgibt. Das Übertragerdichtmittel 20 hat eine Form, die etwa der Außenkontur des Übertragungskörpers 9 entspricht. Die erste Kapselmasse 11 ist so angeordnet, dass lediglich die Anlageflächen 9 aus der ersten Kapselmasse 11 hervortreten. Die zweite Kapselmasse 12a ist so angeordnet, dass die erste Kapselmasse 11 ebenfalls nahezu vollständig eingebettet ist.

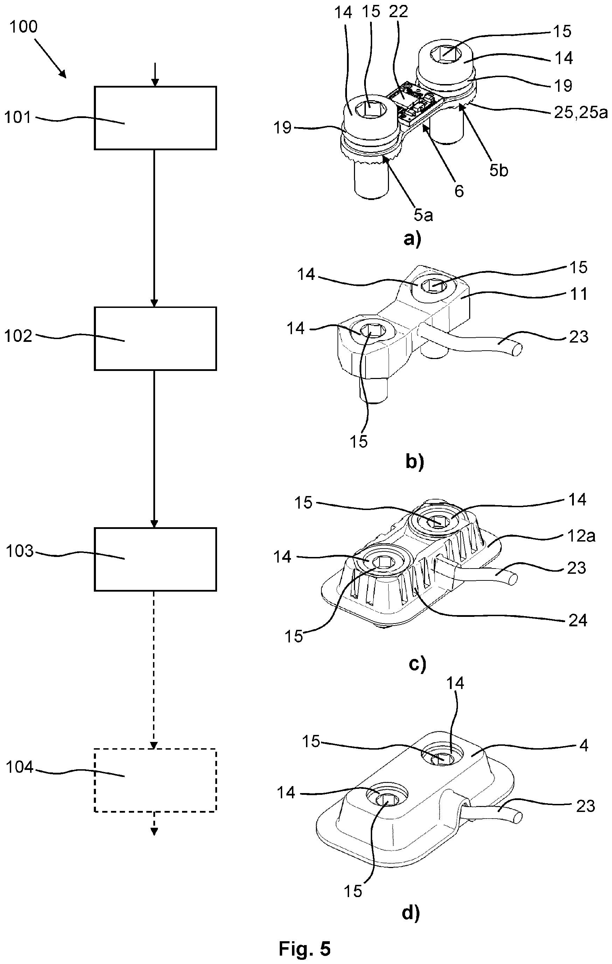

In Fig. 3 ist zudem eine Verbindungsleitung 23 zu erkennen, die von außen zur Platinenanordnung 22, beispielhaft dargestellt in Fig. 1 und 2, führt und mit der die Sensoranordnung kontaktierbar ist, insbesondere in ein - nicht dargestelltes - Messsystem einbindbar ist. Wie in Fig. 3 und auch in Fig. 5c zu erkennen, weist die zweite Kapselmasse 12a eine Mehrzahl von Rücksprüngen 24 in ihrer Oberfläche auf, die bei aufgebrachter Gehäusehülle 4 eine Mehrzahl von Hohlräumen ausbilden, um einen Volumenausgleich zu gewährleisten.

Bei dem Ausführungsbeispiel der Fig. 1 ist zu erkennen, dass die Montageflächen 9 der Befestigungsabschnitte 5a, 5b jeweils ein Profil 25 aufweisen, das durch eine Mehrzahl pyramidenförmiger Vorsprünge 25a gebildet wird. Das Profil 25 bzw. die pyramidenförmigen Vorsprünge 25a dringen durch die von den Befestigungsmitteln 14 verursachte Normalkraft in die Oberfläche des Fahrwerksteils 2 ein. Durch den kombinierten Kraft- und Formschluss ergibt sich ein dauerhaft stabileres Signal des Sensors und der Übertragungskörper 3 wird relativ zum Fahrwerksteil 2 festgelegt. Ferner durchdringt das Profil 25 bzw. die pyramidenförmigen Vorsprünge 25a mögliche Oberflächenbeschichtungen des Fahrwerksteils 2. Die Oberflächenhärte der pyramidenförmigen Vorsprünge 25a ist größer als die Oberflächenhärte des Fahrwerksteils 2.

Bei dem Ausführungsbeispiel der Fig. 2 sind zwei Unterlegscheiben 26 vorhanden, die in dem in Fig. 2 dargestellten Montagezustand zwischen dem Übertragungskörper 3 und dem Fahrwerksteil 2 angeordnet sind. Die Unterlegscheiben 26 weisen an jeweils zwei Oberflächen bzw. Seiten ein Profil 25 auf, das wiederum durch pyramidenförmige Vorsprünge 25a gebildet wird. Die pyramidenförmigen Vorsprünge 25a dringen beim Anziehen der Befestigungselemente 14 sowohl in den Übertragungskörper 3 als auch das Fahrwerksteil 2 ein. Die Oberflächenhärte der Profile 25 bzw. der Unterlegscheiben 26 ist bei diesem Ausführungsbeispiel größer als die Oberflächenhärte des Fahrwerksteils 2 und der Anlagefläche 9 des Übertragungskörpers 3. Die Anlagefläche 9 ist bei diesem Ausführungsbeispiel glatt ausgebildet.

Fig. 4a bis 4c zeigen ein Ausführungsbeispiel eines Übertragungskörpers 3 für eine Sensoranordnung 1. Der Übertragungskörper 3 weist in den Spannflächen 8 ein Profil 25 in Form von zahnförmigen Vorsprüngen 25b auf, die im Montagezustand ein Lösen eines Befestigungsmittels 14 verhindern. Ferner weist der Übertragungskörper 3 an den Anlageflächen 9 in den Befestigungsabschnitten 5a, 5b ein Profil 25 in Form von pyramidenförmigen Vorsprüngen 25a auf. Die pyramidenförmigen Vorsprünge 25a weisen eine quadratische Grundfläche auf.

Wie deutlich aus Fig. 4a bis Fig. 4c zu erkennen, ist der Sensorabschnitt 6 gegenüber den Befestigungsabschnitten 5a, 5b - sowohl in Bezug auf die Breite als auch in Bezug auf die Dicke - verjüngt ausgebildet, so dass der Sensorabschnitt 6 im Montagezustand einen Abstand zum Fahrwerksteil 2 aufweist. Die pyramidenförmigen Vorsprünge 25a dringen unter der Normalkraft eines Befestigungsmittels 14 - beispielsweise gemäß Fig. 1 und 2 - in die Oberfläche des Fahrwerksteils 2 ein. Der Sensor 10 ist gemäß Fig. 4a im Sensorabschnitt 6 befestigt, hier mit einem hitzeaktivierten Klebstoff. Die Befestigungsabschnitte 5a, 5b sind durch die Wahl der Materialdicke deutlich steifer ausgebildet als der Sensorabschnitt 6, wodurch das Signal für den Sensor 10 verbessert wird.

Fig. 5, insbesondere a) bis d), zeigt schematisch den Ablauf eines Verfahrens 100 zur Herstellung einer Sensoranordnung 1 zur Lasterfassung an einem Fahrwerksteil 2 eines Nutzfahrzeugs. Zunächst erfolgt gemäß dem Verfahren 100 ein Bereitstellen 101 eines Übertragungskörpers 3 mit einem ersten Befestigungsabschnitt 5a, einem zweiten Befestigungsabschnitt 5b und einem zwischen den Befestigungsabschnitten 5a, 5b angeordneten Sensorabschnitt 6. Im Sensorabschnitt 6 ist ein Sensor 10 befestigt, der mit einer Platinenanordnung 22 verbunden ist. In a) sind ferner die Befestigungsmittel 14 in Form von Schrauben mit Ausnehmungsdichtmitteln 19 dargestellt.

Anschließend erfolgt ein zumindest teilweises Einbetten 102 des Übertragungskörpers 3 in eine erste Kapselmasse 11, wobei der Sensor 10 und die Platinenanordnung 22 vollständig eingebettet werden. Lediglich die Verbindungsleitung 23 tritt nach dem Einbetten 102 aus der ersten Kapselmasse 11 hervor. Auch der Übertragungskörper 3 wird mit Ausnahme der Anlageflächen 9 vollständig eingebettet.

Nachfolgend erfolgt ein zumindest teilweises Einbetten 103 der ersten Kapselmasse 11 in eine zweite Kapselmasse 12a, wobei die erste Kapselmasse 11 und die zweite Kapselmasse 12a unterschiedliche Materialeigenschaften aufweisen. Optional ist abschließend das Befestigen 104 einer Gehäusehülle 4 an der zweiten Kapselmasse 12a vorgesehen. Die zweite Kapselmasse 12a weist in ihrer Oberfläche Rücksprünge 24 auf, die zusammen mit der aufgebrachten Gehäusehülle 4 Hohlräume ausbilden.

### Bezugszeichenliste

- 1: Sensoranordnung
- 2: Fahrwerksteil
- 3: Übertragungskörper
- 4: Gehäusehülle
- 5a: Erster Befestigungsabschnitt
- 5b: Zweiter Befestigungsabschnitt
- 6: Sensorabschnitt
- 7: Montageausnehmung
- 8: Spannfläche
- 9: Anlagefläche
- 10: Sensor
- 11: Erste Kapselmasse
- 12: Entkopplungsteil
- 12a: Zweite Kapselmasse
- 13: Ausnehmungen
- 14: Befestigungsmittel
- 15: Betätigungsinnensechskant
- 16: Sackloch
- 17: Stehbolzen
- 18: Nut
- 19: Ausnehmungsdichtmittel
- 20: Übertragerdichtmittel
- 21: Zuleitung
- 22: Platinenanordnung
- 23: Verbindungsleitung
- 24: Rücksprünge
- 25: Profil
- 25a: pyramidenförmige Vorsprünge
- 25b: zahnförmige Vorsprünge
- 26: Unterlegscheiben
- 100: Verfahren
- 101: Bereitstellen
- 102: Einbetten von 3 in 11
- 103: Einbetten von 11 in 12a
- 104: Befestigen

## Patentansprüche

1. Sensoranordnung (1) zur Lasterfassung an einem Fahrwerksteil (2) eines Nutzfahrzeuges, mit mindestens einem Übertragungskörper (3), wobei der Übertragungskörper (3) mindestens einen ersten Befestigungsabschnitt (5a), mindestens einen zweiten Befestigungsabschnitt (5b) und mindestens einen Sensorabschnitt (6) aufweist, wobei jeder Befestigungsabschnitt (5a,5b) mindestens eine Montageausnehmung (7), mindestens eine Spannfläche (8) und mindestens eine Anlagefläche (9) aufweist, wobei die Anlagefläche (9) im Montagezustand in Richtung des Fahrwerksteils (2) gerichtet ist, wobei der Sensorabschnitt (6) den ersten Befestigungsabschnitt (5a) mit dem zweiten Befestigungsabschnitt (5b) verbindet, und wobei am Sensorabschnitt (6) mindestens ein Sensor (10) angeordnet ist, wobei der Übertragungskörper (3) zumindest teilweise in eine erste elastische Kapselmasse (11) eingebettet ist, und wobei
die erste elastische Kapselmasse (11) zumindest teilweise von einem Entkopplungsteil (12) umgeben ist,
**dadurch gekennzeichnet, dass**
die erste Kapselmasse (11) und das Entkopplungsteil (12) zu den Montageausnehmungen (7) koaxial angeordnete Ausnehmungen (13) aufweisen, so dass ein in die Ausnehmungen (13) einbringbares Befestigungsmittel (14) unmittelbar mit der Spannfläche (8) des jeweiligen Befestigungsabschnitts (5a,5b) des Übertragungskörpers (3) zusammenwirken kann.

2. Sensoranordnung (1) nach Anspruch 1,
**dadurch gekennzeichnet, dass**
mindestens eine Gehäusehülle (4) umfasst ist, und dass die Gehäusehülle (4) auf dem Entkopplungsteil (12) gelagert ist, insbesondere stoff- und/oder formschlüssig mit dem Entkopplungsteil (12) verbunden ist.

3. Sensoranordnung (1) nach Anspruch 1 oder 2,
**dadurch gekennzeichnet, dass**
das Entkopplungsteil (12) als zweite Kapselmasse (12a) ausgebildet ist, dass die erste Kapselmasse (11) zumindest teilweise in die zweite Kapselmasse (12a) eingebettet ist, und dass die erste Kapselmasse (11) und die zweite Kapselmasse (12a) unterschiedliche Materialeigenschaften aufweisen.

4. Sensoranordnung (1) nach Anspruch 3,
**dadurch gekennzeichnet, dass**
die erste Kapselmasse (11) einen geringeren Elastizitätsmodul als die zweite Kapselmasse (12a) aufweist oder dass die zweite Kapselmasse (12a) einen geringeren Elastizitätsmodul als die erste Kapselmasse (11) aufweist, insbesondere dass die erste Kapselmasse (11) und die zweite Kapselmasse (12a) aus einem Elastomer, einem Thermoplast oder einem thermoplastischen Elastomer gebildet sind.

5. Sensoranordnung (1) nach einem der Ansprüche 1 bis 4,
**dadurch gekennzeichnet, dass**
mindestens ein Befestigungsmittel (14) vorhanden ist, insbesondere dass mindestens zwei Befestigungsmittel (14) vorhanden sind, vorzugsweise dass das Befestigungsmittel (14) als Schraube ausgebildet ist, oder dass das Befestigungsmittel (14) als Schraubenmutter, bevorzugt als Schraubenmutter mit einem Betätigungsinnensechskant (15), ausgebildet ist.

6. Sensoranordnung (1) nach einem der Ansprüche 1 bis 5,
**dadurch gekennzeichnet, dass**
mindestens ein Ausnehmungsdichtmittel (19) vorhanden ist, insbesondere mindestens zwei Ausnehmungsdichtmittel (19) vorhanden sind, und dass das Ausnehmungsdichtmittel (19) zwischen einem Befestigungsmittel (14) und einer Ausnehmung (13) dichtend anordenbar ist, insbesondere dass das Ausnehmungsdichtmittel (19) als umlaufende Dichtung an dem Befestigungsmittel (14) ausgebildet ist, oder dass das Ausnehmungsdichtmittel (19) in der Ausnehmung (13) angeordnet ist.

7. Sensoranordnung (1) nach einem der Ansprüche 1 bis 6,
**dadurch gekennzeichnet, dass**
mindestens ein Übertragerdichtmittel (20) vorhanden ist, und dass das Übertragerdichtmittel (20) zwischen erster Kapselmasse (11) und Fahrwerksteil (2) und/oder zwischen Entkopplungsteil (12) und Fahrwerksteils (2) anordenbar ist, insbesondere dass das Übertragerdichtmittel (20) beide Montageöffnungen (7) umschließt.

8. Sensoranordnung (1) nach einem der Ansprüche 1 bis 7,
**dadurch gekennzeichnet, dass**
mindestens eine mit dem Sensor (10) elektrisch verbundene Platinenanordnung (22) in der ersten Kapselmasse (11) angeordnet, insbesondere von der ersten Kapselmasse (11) vollständig umschlossen, ist, vorzugsweise dass die Platinenanordnung (22) zumindest eine Messverstärker- und/oder Auswerteelektronik beinhaltet und/oder das Entkopplungsteil (12) eine Mehrzahl von Rücksprüngen (24) in einer Oberfläche aufweist, insbesondere so, dass zwischen Entkopplungsteil (12) und Gehäusehülle (4) eine Mehrzahl von Hohlräumen ausgebildet ist.

9. Sensoranordnung (1) nach einem der Ansprüche 1 bis 8,
**dadurch gekennzeichnet, dass**
die Anlageflächen (9) und/oder die Spannflächen (8) der Befestigungsabschnitte (5a.5b) ein Profil (25) aufweisen, insbesondere ein Pyramiden-, Zahn- oder Rautenprofil mit einer Mehrzahl pyramiden-, zahn- oder rautenförmiger Vorsprünge (25a,25b) und/oder dass mindestens zwei Unterlegscheiben (26) vorhanden sind, dass die Unterlegscheiben (26) im Montagezustand zwischen Anlagefläche (9) und Fahrwerksteil (2) anordenbar sind, und dass mindestens eine Oberfläche jeder Unterlegscheibe (26), vorzugsweise mindestens zwei Oberflächen jeder Unterlegscheibe (26), ein Profil (25) aufweist, insbesondere ein Pyramiden-, Zahn- oder Rautenprofil mit einer Mehrzahl pyramiden-, zahn- oder rautenförmiger Vorsprünge (25a,25b).

10. Sensoranordnung (1) nach einem der Ansprüche 1 bis 9,
**dadurch gekennzeichnet, dass**
eine Dicke des Übertragungskörpers (3) im Sensorabschnitt (6) zumindest abschnittsweise geringer als in den Befestigungsabschnitten (5a,5b) ausgebildet ist, so dass der Sensorabschnitt (6) bei Montage auf einer Montagefläche einen Abstand zur Montagefläche aufweist und/oder dass eine Breite des Übertragungskörpers (3) im Sensorabschnitt (6) geringer als in den Befestigungsabschnitten (5a,5b) ausgebildet ist.

11. Sensoranordnung (1) nach einem der Ansprüche 1 bis 10,
**dadurch gekennzeichnet, dass**
eine Dicke des Übertragungskörpers (3) im Sensorabschnitt (6) zumindest abschnittsweise geringer als in den Befestigungsabschnitten (5a,5b) ausgebildet ist, so dass der Sensorabschnitt (6) bei Montage auf einer Montagefläche einen Abstand zur Montagefläche aufweist und/oder dass eine Breite des Übertragungskörpers (3) im Sensorabschnitt (6) geringer als in den Befestigungsabschnitten (5a,5b) ausgebildet ist, und dass die Befestigungsabschnitte (5a,5b) in ihren Anlageflächen (9) ein Profil (25) aufweisen, und dass das Profil (25) so ausgestaltet und eingerichtet ist, dass es in eine Oberfläche des Fahrwerksteils (2) zumindest teilweise eindringen kann.

12. Verfahren (100) zur Herstellung einer Sensoranordnung (1) zur Lasterfassung an einem Fahrwerksteil (2) eines Nutzfahrzeuges nach einem der Ansprüche 1 bis 10, wobei mindestens folgender Verfahrensschritt umfasst ist:
- Bereitstellen (101) mindestens eines Übertragungskörpers (3) mit einem ersten Befestigungsabschnitt (5a), einem zweiten Befestigungsabschnitt (5b) und einem zwischen den Befestigungsabschnitten (5a,5b) angeordneten Sensorabschnitt (6), wobei im Sensorabschnitt (6) mindestens ein Sensor (10) befestigt ist, wobei der Sensor (10) mit einer Platinenanordnung (22) verbunden ist,
**dadurch gekennzeichnet, dass**
ferner mindestens folgende Verfahrensschritte umfasst sind:
- zumindest teilweises Einbetten (102) des Übertragungskörpers (3) in eine erste Kapselmasse (11), wobei der Sensor (10) und die Platinenanordnung (22) vollständig eingebettet werden,
- zumindest teilweises Einbetten (103) der ersten Kapselmasse (11) in eine zweite Kapselmasse (12a), wobei die erste Kapselmasse (11) und die zweite Kapselmasse (12a) unterschiedliche Materialeigenschaften aufweisen.

13. Verfahren nach Anspruch 12,
**dadurch gekennzeichnet, dass**
ferner mindestens folgender Verfahrensschritt umfasst ist:
- Befestigen (104) einer Gehäusehülle (4) an der zweiten Kapselmasse (12a).

## Claims

1. Sensor assembly (1) for load detection on a chassis part (2) of a utility vehicle, having at least one transmission body (3), the transmission body (3) having at least one first fastening section (5a), at least one second fastening section (5b) and at least one sensor section (6), each fastening section (5a, 5b) has at least one mounting recess (7), at least one clamping surface (8) and at least one contact surface (9), the contact surface (9) being directed towards the chassis part (2) in the mounted state, the sensor section (6) connecting the first fastening section (5a) to the second fastening section (5b), and wherein at least one sensor (10) is arranged on the sensor section (6), wherein the transmission body (3) is at least partially embedded in a first elastic capsule material (11), and wherein the first elastic capsule material (11) is at least partially surrounded by a decoupling part (12),
**characterized in that**
the first capsule material (11) and the decoupling part (12) have recesses (13) arranged coaxially to the mounting recesses (7), so that a fastening means (14) which can be inserted into the recesses (13) can interact directly with the clamping surface (8) of the respective fastening section (5a, 5b) of the transmission body (3).

2. Sensor assembly (1) according to claim 1,
**characterized in that**
at least one housing shell (4) is included, and **in that** the housing shell (4) is mounted on the decoupling part (12), in particular is connected to the decoupling part (12) in a material-locking and/or positive-locking manner.

3. Sensor assembly (1) according to claim 1 or 2,
**characterized in that**
the decoupling part (12) is designed as a second capsule material (12a), **in that** the first capsule material (11) is at least partially embedded in the second capsule material (12a), and **in that** the first capsule material (11) and the second capsule material (12a) have different material properties.

4. Sensor assembly (1) according to claim 3,
**characterized in that**
the first capsule material (11) has a lower modulus of elasticity than the second capsule material (12a) or **in that** the second capsule material (12a) has a lower modulus of elasticity than the first capsule material (11), in particular **in that** the first capsule material (11) and the second capsule material (12a) are formed from an elastomer, a thermoplastic or a thermoplastic elastomer.

5. Sensor assembly (1) according to one of claims 1 to 4,
**characterized in that**
at least one fastening means (14) is present, in particular **in that** at least two fastening means (14) are present, preferably **in that** the fastening means (14) is designed as a screw, or **in that** the fastening means (14) is designed as a screw nut, preferably as a screw nut with an actuating hexagon socket (15).

6. Sensor assembly (1) according to one of claims 1 to 5,
**characterized in that**
at least one recess sealing means (19) is present, in particular at least two recess sealing means (19) are present, and **in that** the recess sealing means (19) can be arranged in a sealing manner between a fastening means (14) and a recess (13), in particular **in that** the recess sealing means (19) is designed as a circumferential seal on the fastening means (14), or **in that** the recess sealing means (19) is arranged in the recess (13).

7. Ssensor assembly (1) according to one of claims 1 to 6,
**characterized in that**
at least one transmission sealant (20) is present, and **in that** the transmission sealant (20) can be arranged between first capsule material (11) and chassis part (2) and/or between decoupling part (12) and chassis part (2), in particular in that the transmission sealant (20) encloses both mounting openings (7).

8. Sensor assembly (1) according to one of claims 1 to 7,
**characterized in that**
at least one circuit board assembly (22) electrically connected to the sensor (10) is arranged in the first capsule material (11), in particular is completely enclosed by the first capsule material (11), preferably **in that** the circuit board assembly (22) contains at least one measurement amplifier and/or evaluation electronics and/or the decoupling part (12) has a plurality of setbacks (24) in a surface, in particular in such a way that a plurality of cavities is formed between the decoupling part (12) and the housing shell (4).

9. Sensor assembly (1) according to one of claims 1 to 8,
**characterized in that**
the contact surfaces (9) and/or the clamping surfaces (8) of the fastening sections (5a.5 b) have a profile (25), in particular a pyramidal, toothed or rhombic profile with a plurality of pyramidal, toothed or rhombic projections (25a, 25b) and/or **in that** at least two washers (26) are present, **in that** the washers (26) can be arranged between the contact surface (9) and the chassis part (2) in the mounted state and **in that** at least one surface of each washer (26), preferably at least two surfaces of each washer (26), has a profile (25), in particular a pyramidal, tooth or rhombic profile with a plurality of pyramidal, tooth or rhombic projections (25a, 25b).

10. Sensor assembly (1) according to one of claims 1 to 9,
**characterized in that**
a thickness of the transmission body (3) in the sensor section (6) is formed at least in sections smaller than in the fastening sections (5a, 5b), so that the sensor section (6) has a distance to a mounting surface when mounted on the mounting surface and/or **in that** a width of the transmission body (3) in the sensor section (6) is formed smaller than in the fastening sections (5a, 5b).

11. Sensor assembly (1) according to one of claims 1 to 10,
**characterized in that**
a thickness of the transmission body (3) in the sensor section (6) is formed at least in sections smaller than in the fastening sections (5a, 5b), so that the sensor section (6) has a distance to a mounting surface when mounted on the mounting surface and/or **in that** a width of the transmission body (3) in the sensor section (6) is formed smaller than in the fastening sections (5a, 5b), and **in that** the fastening sections (5a, 5b) have a profile (25) in their contact surfaces (9), and **in that** the profile (25) is designed and set up in such a way that it can at least partially enter into a surface of the chassis part (2).

12. Process (100) for producing a sensor assembly (1) for load detection on a chassis part (2) of a utility vehicle according to one of claims 1 to 10, wherein at least the following process step is included:
- Providing (101) at least one transmission body (3) having a first fastening section (5a), a second fastening section (5b) and a sensor section (6) arranged between the fastening sections (5a, 5b), at least one sensor (10) being fastened in the sensor section (6), wherein the sensor (10) is connected to a circuit board assembly (22),
**characterized in that**
furthermore at least the following process steps are included:
- at least partial embedding (102) of the transmission body (3) in a first capsule material (11), wherein the sensor (10) and the circuit board assembly (22) are completely embedded,
- at least partial embedding (103) of the first capsule material (11) in a second capsule material (12a), wherein the first capsule material (11) and the second capsule material (12a) have different material properties.

13. Process according to claim 12,
**characterized in that**
it further comprises at least the following process step:
- fastening (104) a housing shell (4) to the second capsule material (12a).

## Revendications

1. Dispositif de capteur (1) pour la détection de charge sur une partie de châssis (2) d'un véhicule utilitaire, avec au moins un corps de transmission (3), le corps de transmission (3) présentant au moins une première section de fixation (5a), au moins une deuxième section de fixation (5b) et au moins une section de capteur (6), chaque section de fixation (5a, 5b) présentant au moins un évidement de montage (7), au moins une surface de serrage (8) et au moins une surface de contact (9), la surface de contact (9) étant orientée en direction de la partie de châssis (2) à l'état monté, la section de capteur (6) reliant la première section de fixation (5a) à la deuxième section de fixation (5b), et au moins un capteur (10) étant disposé sur la section de capteur (6), le corps de transmission (3) étant inséré au moins partiellement dans une première masse de capsule élastique (11), et en ce que la première masse de capsule élastique (11) est entourée au moins partiellement par une pièce de découplage (12). **caractérisé en ce que**
la première masse de capsule (11) et la pièce de découplage (12) présentent des évidements (13) disposés coaxialement par rapport aux évidements de montage (7), de sorte qu'un moyen de fixation (14) pouvant être inséré dans les évidements (13) peut coopérer directement avec la surface de serrage (8) de la section de fixation (5a, 5b) respective du corps de transmission (3).

2. Dispositif de capteurs (1) selon la revendication 1,
**caractérisé en ce que**
au moins une enveloppe de boîtier (4) est comprise, et **en ce que** l'enveloppe de boîtier (4) est montée sur la pièce de découplage (12), en particulier est reliée à la pièce de découplage (12) par coopération de matières et/ou de formes.

3. Dispositif de capteurs (1) selon la revendication 1 ou 2,
**caractérisé en ce que**
la pièce de découplage (12) est réalisée sous forme de deuxième masse de capsule (12a), **en ce que** la première masse de capsule (11) est au moins partiellement insérée dans la deuxième masse de capsule (12a), et **en ce que** la première masse de capsule (11) et la deuxième masse de capsule (12a) présentent des différentes propriétés du matériau.

4. Dispositif de détection (1) selon la revendication 3,
**caractérisé en ce que**
la première masse de capsule (11) présente un module d'élasticité plus faible que la deuxième masse de capsule (12a) ou **en ce que** la deuxième masse de capsule (12a) présente un module d'élasticité plus faible que la première masse de capsule (11), en particulier **en ce que** la première masse de capsule (11) et la deuxième masse de capsule (12a) sont formées d'un élastomère, d'un thermoplastique ou d'un élastomère thermoplastique.

5. Dispositif de détection (1) selon l'une des revendications 1 à 4, **caractérisé en ce que**
au moins un moyen de fixation (14) est présent, en particulier qu'au moins deux moyens de fixation (14) sont présents, de préférence que le moyen de fixation (14) est réalisé sous forme de vis, ou que le moyen de fixation (14) est réalisé sous forme d'écrou à vis, de préférence d'écrou à vis avec un six pans intérieur d'actionnement (15).

6. Dispositif de capteurs (1) selon l'une quelconque des revendications 1 à 5, **caractérisé en ce que**
au moins un moyen d'étanchéité d'évidement (19) est présent, en particulier au moins deux moyens d'étanchéité d'évidement (19) sont présents, et **en ce que** le moyen d'étanchéité d'évidement (19) peut être disposé de manière étanche entre un moyen de fixation (14) et un évidement (13), en particulier **en ce que** le moyen d'étanchéité d'évidement (19) est réalisé sous forme de joint d'étanchéité périphérique sur le moyen de fixation (14), ou **en ce que** le moyen d'étanchéité d'évidement (19) est disposé dans l'évidement (13).

7. Dispositif de capteurs (1) selon l'une quelconque des revendications 1 à 6, **caractérisé en ce que**
au moins un moyen d'étanchéité de transmission (20) est présent, et **en ce que** le moyen d'étanchéité de transmission (20) peut être disposé entre la première masse de capsule (11) et la partie de châssis (2) et/ou entre la partie de découplage (12) et la partie de châssis (2), en particulier **en ce que** le moyen d'étanchéité de transmission (20) entoure les deux ouvertures de montage (7).

8. Dispositif de détection (1) selon l'une des revendications 1 à 7,
**caractérisé en ce que**
au moins un assemblage de carte de circuit imprimé (22) relié électriquement au capteur (10) est disposé dans la première masse de capsule (11), en particulier est complètement enveloppé par la première masse de capsule (11), de préférence **en ce que** l'assemblage de carte de circuit imprimé (22) contient au moins une électronique d'amplificateur de mesure et/ou d'évaluation, et/ou la pièce de découplage (12) présente une pluralité d'évidements (24) dans une surface, en particulier de telle sorte qu'une pluralité de cavités est formée entre la pièce de découplage (12) et l'enveloppe de boîtier (4).

9. Dispositif de capteurs (1) selon l'une quelconque des revendications 1 à 8, **caractérisé en ce que**
les surfaces de contact (9) et/ou les surfaces de serrage (8) des sections de fixation (5a,5b) présentent un profil (25), en particulier un profil pyramidal, denté ou en losange avec une pluralité de saillies (25a, 25b) en forme de pyramide, de dent ou de losange et/ou **en ce que**
au moins deux rondelles (26) sont présentes, **en ce que** les rondelles (26) peuvent être disposées à l'état monté entre la surface de contact (9) et la partie de châssis (2), et **en ce qu'**au moins une surface de chaque rondelle (26), de préférence au moins deux surfaces de chaque rondelle (26), présente un profil (25), en particulier un profil en pyramide, en dents ou en losange avec une pluralité de saillies (25a, 25b) en forme de pyramide, de dents ou de losange.

10. Dispositif de capteurs (1) selon l'une quelconque des revendications 1 à 9, **caractérisé en ce que**
une épaisseur du corps de transmission (3) est réalisée dans la section de capteur (6) au moins par sections plus faible que dans les sections de fixation (5a, 5b), de sorte que la section de capteur (6) présente un écart par rapport à la surface de montage lors du montage sur une surface de montage et/ou qu'une largeur du corps de transmission (3) est réalisée dans la section de capteur (6) plus faible que dans les sections de fixation (5a, 5b).

11. Dispositif de détection (1) selon l'une des revendications 1 à 10,
**caractérisé en ce que**
une épaisseur du corps de transmission (3) est réalisée dans la section de capteur (6) au moins par sections plus petite que dans les sections de fixation (5a, 5b), de sorte que la section de capteur (6) présente un écart par rapport à la surface de montage lors du montage sur une surface de montage et/ou qu'une largeur du corps de transmission (3) est réalisée dans la section de capteur (6) plus petite que dans les sections de fixation (5a,5b), et **en ce que** les sections de fixation (5a, 5b) présentent un profil (25) dans leurs surfaces de contact (9), et **en ce que** le profil (25) est conçu et agencé de telle sorte qu'il peut pénétrer au moins partiellement dans une surface de la partie de châssis (2).

12. Procédé (100) de fabrication d'un dispositif de capteurs (1) pour la détection de charge sur une partie de châssis (2) d'un véhicule utilitaire selon l'une des revendications 1 à 10, dans lequel au moins l'étape de procédé suivante est comprise :
- Préparation (101) d'au moins un corps de transmission (3) avec une première section de fixation (5a), une deuxième section de fixation (5b) et une section de capteur (6) disposée entre les sections de fixation (5a, 5b), au moins un capteur (10) étant fixé dans la section de capteur (6), le capteur (10) étant relié à un assemblage de carte de circuit imprimé (22),
**caractérisé en ce que**
en outre, au moins les étapes de procédé suivantes sont comprises :
- l'enrobage au moins partiel (102) du corps de transmission (3) dans une première masse d'encapsulation (11), le capteur (10) et l'assemblage de carte de circuit imprimé (22) étant complètement enrobés,
- l'enrobage (103) au moins partiel de la première masse de capsule (11) dans une deuxième masse de capsule (12a), la première masse de capsule (11) et la deuxième masse de capsule (12a) présentant des différentes propriétés du matériau.

13. Procédé selon la revendication 12,
**caractérisé en ce que**
en outre, au moins l'étape de procédé suivante est comprise :
- la fixation (104) d'une enveloppe de boîtier (4) à la deuxième masse de capsule (12a).
